# FASCICULE DE BREVET EUROPEEN

(11) **EP 0 897 096 B1**
(45) Date de publication et mention de la délivrance du brevet: **10.04.2002**
(21) Numéro de dépôt: 98402024.8
(22) Date de dépôt: 10.08.1998
(51) Int. Cl.: F28G 1/12, B01D 33/15

(54) **Filtre à insérer sur une conduite et échangeur de chaleur équipé d'un tel filtre**
Filter zum Einbauen in eine Leitung und ein mit diesem Filter bestückter Wärmetauscher
Filter for insertion into a conduit and heat exchanger equipped with the same

(30) Priorité: 13.08.1997 FR 9710322
(43) Date de publication de la demande: 17.02.1999
(73) Titulaire: E. BEAUDREY & Cie., F-75018 Paris (FR)
(72) Inventeur: Jackson, Philip, 75007 Paris (FR)
(74) Mandataire: CABINET BONNET-THIRION

(56) Documents cités:
- DE-U- 8 526 836
- FR-A- 2 716 530
- PATENT ABSTRACTS OF JAPAN vol. 007, no. 211 (M-243), 17 septembre 1983 & JP 58 106399 A (HITACHI SEISAKUSHO KK), 24 juin 1983

## Description

La présente invention concerne d'une manière générale les filtres du genre comportant, dans un corps de filtre propre à se raccorder à deux tronçons successifs d'une quelconque conduite, un organe de filtration, qui, en forme générale de roue, s'étend transversalement dans le corps de filtre, et qui, monté rotatif autour de l'axe de celui-ci, comporte un élément filtrant dont l'emprise s'étend globalement sur la section de passage de ce corps de filtre, avec, d'un côté de l'organe de filtration, pour une circulation locale à contre-courant d'un fluide de nettoyage à travers son élément filtrant, un organe de circulation, qui s'étend suivant un rayon de l'organe de filtration et auquel se raccorde une canalisation.

Les filtres de ce type ont notamment pour avantage un encombrement axial réduit qui permet de les insérer, à la manière d'une simple manchette, sur la conduite à équiper, même dans un environnement encombré, leur corps de filtre étant alors simplement formé d'une virole au diamètre de cette conduite.

Ils conviennent à l'interception de débris ou autres éléments solides les plus divers.

L'un d'eux se trouve notamment décrit dans le document FR-A-2 609 644.

Dans ce document, le filtre intervient sur une conduite sous pression, qui, en pratique, est une conduite d'entrée pour l'installation concernée, celle-ci étant à protéger des débris, détritus ou autres éléments solides véhiculés par le flux correspondant.

L'organe de circulation mis en oeuvre pour le fluide de nettoyage y est disposé en amont de l'élément filtrant, et il s'agit alors d'un organe d'aspiration.

Conjointement, la canalisation à laquelle est raccordé cet organe de circulation est alors une canalisation de sortie pour ce fluide de nettoyage.

De fait, ce fluide de nettoyage est directement prélevé sur le flux dans lequel baigne l'élément filtrant, c'est-à-dire sur le flux qui, véhiculé par la conduite concernée, traverse cet élément filtrant.

Dans le document FR-A-2 716 530, il a été proposé, cependant, de disposer un filtre de même type sur la conduite de sortie d'un échangeur de chaleur dans lequel circulent des éléments solides de nettoyage, pour constituer à ce niveau un dispositif d'interception propre à la retenue de ces éléments solides de nettoyage et ainsi permettre un recyclage de ces derniers.

Ce filtre comporte, alors, deux organes de circulation, qui, disposés chacun respectivement de part et d'autre de l'organe de filtration, l'un en aval de celui-ci dans le sens du flux sortant, l'autre en amont, sont établis en correspondance l'un avec l'autre, et à chacun desquels se raccorde une canalisation, l'une d'entrée, l'autre de sortie, pour le fluide de nettoyage correspondant.

En pratique, dans ce document, les deux organes de circulation ainsi mis en oeuvre sont l'un et l'autre des trompes, c'est-à-dire des gouttières tronconiques dont la section transversale va en décroissant de la périphérie de l'organe de filtration à l'axe de celui-ci.

De manière plus précise, dans ce document, un filtre à insérer sur une conduite, est du genre comportant, dans un corps de filtre propre à se raccorder à deux tronçons successifs de cette conduite, un organe de filtration, qui, en forme générale de roue, s'étend transversalement dans le corps de filtre, et qui, monté rotatif autour de l'axe de celui-ci, comporte un élément filtrant dont l'emprise s'étend globalement sur la section de passage du corps de filtre, avec, d'un côté de cet organe de filtration, pour une circulation locale à contre-courant d'un fluide de nettoyage à travers son élément filtrant, un organe de circulation, qui s'étend suivant un rayon de l'organe de filtration, et auquel se raccorde une canalisation qui est une canalisation d'entrée pour le fluide de nettoyage, tandis que, au droit de cet organe de circulation, et sensiblement suivant le contour de celui-ci, se trouve interposée, localement, dans le corps de filtre, du côté de l'organe de filtration opposé à l'organe de circulation, au voisinage immédiat de l'organe de filtration, une plaque d'interception fixe, et que, au corps de filtre, est raccordée, latéralement, entre l'élément filtrant de l'organe de filtration et la plaque d'interception, une autre canalisation, qui est une canalisation de sortie pour le fluide de nettoyage.

Ainsi, pour la circulation du fluide de nettoyage, il n'est mis en oeuvre un organe de circulation, en l'espèce une trompe, que d'un côté de l'organe de filtration, cependant que, de l'autre côté de celui-ci, n'intervient qu'une simple plaque d'interception, dont la dimension axiale, c'est-à-dire la dimension suivant l'axe de la conduite, en l'espèce l'épaisseur, peut avantageusement être très notablement moindre que celle d'un tel organe de circulation.

L'encombrement axial de l'ensemble s'en trouve avantageusement réduit d'autant.

La présente invention a cependant d'une manière générale pour objet une disposition permettant avantageusement de réduire encore cet encombrement axial.

Selon l'invention, un filtre du genre ci-dessus est caractérisé en ce que l'organe de filtration comporte des rayons, qui, en saillie sur son élément filtrant, fractionnent en compartiments son volume intérieur au droit de la canalisation formant la canalisation de sortie du fluide de nettoyage, et ces rayons s'étendent librement jusqu'au voisinage immédiat du corps de filtre.

L'invention a encore pour objet tout échangeur de chaleur dans lequel circulent des éléments solides de nettoyage et sur la conduite de sortie duquel est interposé, pour la retenue de ces éléments solides de nettoyage, un dispositif d'interception constitué par un tel filtre.

Les caractéristiques et avantages de l'invention ressortiront d'ailleurs de la description qui va suivre, à titre d'exemple, en référence aux dessins schématiques annexés sur lesquels :
la figure 1 est une vue partielle en élévation-coupe axiale d'un filtre suivant l'invention représenté en place sur une conduite, en l'espèce la conduite de sortie d'un échangeur de chaleur ;
la figure 2 reprend, à échelle supérieure, le détail de la figure 1 repéré par un encart II sur cette figure 1 ;
la figure 3 est une vue partielle en coupe transversale du filtre suivant l'invention, suivant la ligne III-III de la figure 1 ;
la figure 4 en est une vue partielle en plan-coupe, suivant la ligne IV-IV de la figure 1 ;
la figure 5 reprend, à échelle supérieure, le détail de la figure 4 repéré par un encart V sur cette figure 4.

Ces figures illustrent, à titre d'exemple, l'application de l'invention à un échangeur de chaleur 10, dans lequel circulent, suivant des dispositions du type de celles décrites dans le brevet français No 94 02109 mentionné ci-dessus, des éléments solides de nettoyage, non représentés, en pratique des boules de caoutchouc mousse, et sur la conduite de sortie 11 duquel est interposé, pour la retenue de ces éléments solides de nettoyage, en vue d'un recyclage de ceux-ci, un dispositif d'interception constitué globalement par un filtre 12.

De manière connue en soi, ce filtre 12 comporte, dans un corps de filtre 13 propre à se raccorder à deux tronçons 11A, 11B successifs de la conduite de sortie 11 concernée, en s'insérant à la manière d'une manchette entre ceux-ci, un organe de filtration 14, qui, en forme générale de roue, s'étend transversalement dans le corps de filtre 13, et qui, monté rotatif autour de l'axe A de celui-ci, comporte un élément filtrant 15 dont l'emprise s'étend globalement sur la section de passage du corps de filtre 13, suivant la totalité de cette section de passage, avec, d'un côté de cet organe de filtration 14, pour une circulation locale, à contre-courant, d'un fluide de nettoyage à travers son élément filtrant 15, un organe de circulation 16, qui s'étend suivant un rayon de l'organe de filtration 14, et auquel se raccorde une canalisation 18.

Dans la forme de réalisation représentée, l'échangeur de chaleur 10 est un échangeur de chaleur tubulaire mettant en oeuvre un faisceau de tubes 19, et le tronçon 11A de sa conduite de sortie 11 en aval duquel intervient le filtre 12 est directement formé par la boîte à eau usuellement prévue en aval d'un tel faisceau de tubes 19.

Les positions relatives des tronçons 11A, 11B de la conduite de sortie 11 et du filtre 12, et il en sera de même pour toute autre position relative dans ce qui suit, sont appréciées par rapport au sens de circulation du flux dans cette conduite de sortie 11.

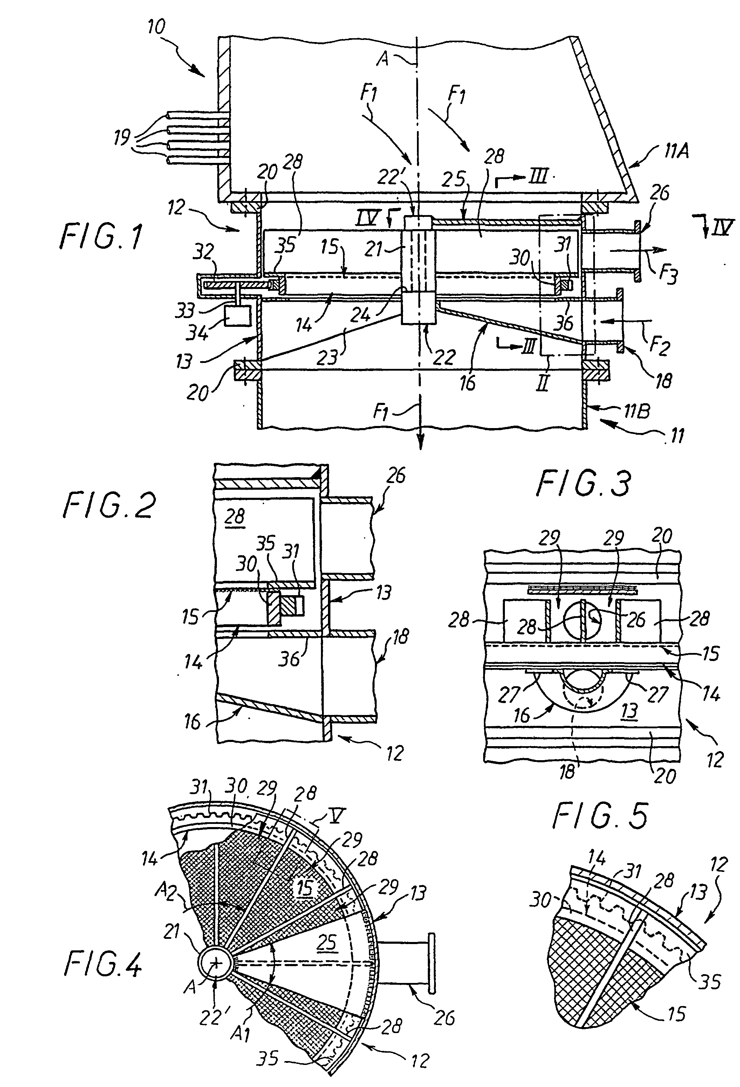

Celui-ci est repéré par des flèches F1 sur la figure 1.

De manière connue en soi, le corps de filtre 13 du filtre 12 se présente sous la forme d'une virole dont le diamètre est sensiblement égal à celui de la conduite de sortie 11, ou, plus précisément, du tronçon 11B de cette conduite de sortie 11 en amont duquel intervient ce filtre 12, et qui, à ses extrémités, comporte, de manière usuelle, des brides 20 propres à en assurer la fixation.

Les dispositions qui précèdent ne relevant pas en propre de la présente invention, elles ne seront pas décrites plus en détail ici.

De manière connue en soi, et suivant des dispositions qui relèvent en pratique de l'homme de l'art, l'organe de filtration 14 comporte, dans sa zone centrale, un moyeu 21 par lequel il est en prise à rotation avec un arbre 22 fixe, cet arbre 22 étant porté, suivant l'axe du corps de filtre 13, par des bras de support 23 qui, solidaires de ce corps de filtre 13, s'étendent en rayon dans celui-ci.

Dans la forme de réalisation représentée, les bras de support 23 s'étendent en aval de l'organe de filtration 14 dans le corps de filtre 13, et l'arbre 22 est un arbre épaulé.

Autrement dit, cet arbre 22 comporte transversalement un épaulement 24 sur lequel porte le moyeu 21 de l'organe de filtration 14.

Suivant l'invention, la canalisation 18 raccordée à l'organe de circulation 16 est une canalisation d'entrée pour le fluide de nettoyage, tel que schématisé par une flèche F2 sur la figure 1, au droit de cet organe de circulation 16, et sensiblement suivant le contour de celui-ci, se trouve interposée, localement, dans le corps de filtre 13, du côté de l'organe de filtration 14 opposé à l'organe de circulation 16, au voisinage immédiat de l'organe de filtration 14, une plaque d'interception 25 fixe, et, au corps de filtre 13 est raccordée, latéralement, entre l'élément filtrant 15 de l'organe de filtration 14 et la plaque d'interception 25, une autre canalisation 26, qui, tel que schématisé par la flèche F3 sur la figure 1, est une canalisation de sortie pour le fluide de nettoyage.

En pratique, l'organe de circulation 16 est disposé en aval de l'organe de filtration 14 dans le corps de filtre 13, au niveau des bras de support 23 de l'arbre 22, et, à la manière de ceux-ci, il s'étend en rayon du corps de filtre 13 à cet arbre 22, en étant préférentiellement solidarisé tant à cet arbre 22 qu'au corps de filtre 13.

En pratique également, cet organe de circulation 16 est une trompe, c'est-à-dire une gouttière globalement tronconique, dont la section transversale va en décroissant du corps de filtre 13 au moyeu 21, ou, autrement dit, de la périphérie de l'organe de filtration 14 à l'axe de celui-ci.

Dans la forme de réalisation représentée, l'organe de circulation 16 enveloppe, sensiblement tangentiellement, le débouché de la canalisation 18 dans le corps de filtre 13.

Quoi qu'il en soit, ouvert en direction de l'organe de filtration 14 sur la quasi totalité de sa longueur, il est borgne à son extrémité opposée au corps de filtre 13.

Dans la forme de réalisation représentée, l'organe de circulation 16 comporte, le long de ses bords libres, des rebords 27, qui, parallèles à l'organe de filtration 14, et, donc, perpendiculaires à l'axe A du corps de filtre 13, sont dirigés en sens opposés l'un par rapport à l'autre.

La plaque d'interception 25, elle, est disposée en amont de l'organe de filtration 14 dans le corps de filtre 13.

Comme l'organe de circulation 16, cette plaque d'interception 25 s'étend en rayon du corps de filtre 13 à l'arbre 22, en étant préférentiellement solidarisée tant à cet arbre 22, ou, plus exactement, à un bloc 22' rapporté en bout de celui-ci, qu'au corps de filtre 13.

En plan, le contour de l'organe de circulation 16 est celui d'un secteur circulaire.

Ce contour est donc globalement triangulaire.

Comme l'organe de circulation 16, également, la plaque d'interception 25 a, en plan, un contour globalement triangulaire de secteur circulaire.

Dans la forme de réalisation représentée, l'organe de filtration 14 comporte des rayons 28, qui en saillie sur son élément filtrant 15, du côté amont de celui-ci, fractionnent en compartiments 29 son volume intérieur au droit de la canalisation 26 formant la canalisation de sortie du fluide de nettoyage, et ces rayons 28 s'étendent librement jusqu'au voisinage immédiat du corps de filtre 13.

Par exemple, et tel que représenté, les rayons 28 sont de simples fers plats, qui s'étendent parallèlement à l'axe A du corps de filtre 13, et qui, à la manière d'ailettes, sont solidaires du moyeu 21.

Ces rayons 28 étant établis à intervalles réguliers, les compartiments 29 qu'ils définissent entre eux sont égaux.

En plan, le contour de ces compartiments 29 est celui d'un secteur circulaire.

Préférentiellement, l'angle au centre A1 de la plaque d'interception 25, qui est également l'angle au centre de l'organe de circulation 16, est supérieur à l'angle au centre A2 des compartiments 29 ainsi définis par les rayons 28 de l'organe de filtration 14

Dans la forme de réalisation représentée, l'organe de filtration 14 comporte, du côté de son élément filtrant 15 opposé à ces rayons 28, une jante 30 dont est solidaire, extérieurement, une couronne dentée 31 propre à son entraînement à rotation, cette couronne dentée 31 engrenant avec un pignon 32 lui-même solidaire en rotation de l'arbre de sortie 33 d'un moteur 34 disposé à l'extérieur du corps de filtre 13.

La jante 30 étant nécessairement en retrait par rapport au corps de filtre 13 pour le logement de la couronne dentée 31, les rayons 28 s'étendent au-delà de cette jante 30.

Dans la forme de réalisation représentée, entre les rayons 28 et la jante 30 s'étend, transversalement, à la manière d'une rondelle, un flasque annulaire 35.

L'élément filtrant 25, qui est par exemple une simple toile métallique, est pris en sandwich entre ce flasque annulaire 35 et la tranche correspondante de la jante 30.

De l'autre côté de la jante 30 par rapport au flasque annulaire 35, un autre flasque annulaire 36 est prévu transversalement dans le corps de filtre 13, au ras de l'organe de circulation 16 et des bras de support 23, pour délimiter la chambre dans laquelle intervient la couronne dentée 31.

Dans la forme de réalisation représentée, enfin, les deux canalisations 18, 26 par lesquelles intervient le fluide de nettoyage s'étendent l'une et l'autre d'un même côté du corps de filtre 13, en se raccordant l'une et l'autre sensiblement radialement à celui-ci.

En service, les éléments solides de nettoyage qui circulent dans l'échangeur de chaleur 10 sont arrêtés par l'organe de filtration 14.

A temps régulier, ou de manière continue, cet organe de filtration 14 est commandé en rotation par le moteur 34, celui-ci entraînant le pignon 32, et donc la couronne dentée 31, par son arbre de sortie 33.

Les compartiments 29 que délimitent deux à deux les rayons 28 de cet organe de filtration 14 défilent ainsi un par un entre l'organe de circulation 16 et la plaque d'interception 25.

A chaque fois, le flux de nettoyage, qui, suivant des dispositions du type de celles décrites dans le brevet français No 94 02109 mentionné ci-dessus, peut être prélevé sur la conduite d'entrée de l'échangeur de chaleur 10, extrait du compartiment 29 correspondant les éléments solides de nettoyage présents dans celui-ci, en circulant localement à contre-courant à travers l'élément filtrant 15, et, dûment canalisé par la plaque d'interception 25, qui intervient ainsi à la manière d'un masque, il dirige ces éléments solides de nettoyage sur la canalisation 26 formant sa canalisation de sortie.

Bien entendu, la présente invention ne se limite pas à la forme de réalisation décrite et représentée, mais englobe toute variante d'exécution.

En particulier, au lieu d'avoir la forme d'un disque plan, comme plus particulièrement représenté, l'élément filtrant que comporte l'organe de filtration mis en oeuvre peut tout aussi bien avoir une autre configuration, et, par exemple, être légèrement conique ou tronconique.

## Revendications

1. Filtre à insérer sur une conduite, du genre comportant, dans un corps de filtre (13) propre à se raccorder à deux tronçons (11A, 11B) successifs de la conduite (11) concernée, un organe de filtration (14), qui, en forme générale de roue, s'étend transversalement dans le corps de filtre (13), et qui, monté rotatif autour de l'axe (A) de celui-ci, comporte un élément filtrant (15) dont l'emprise s'étend globalement sur la section de passage du corps de filtre (13), avec, d'un côté de cet organe de filtration (14), pour une circulation locale à contre-courant d'un fluide de nettoyage à travers son élément filtrant (15), un organe de circulation (16), qui s'étend suivant un rayon de l'organe de filtration (14), et auquel se raccorde une canalisation (18) qui est une canalisation d'entrée pour le fluide de nettoyage, tandis que, au droit de cet organe de circulation (16), et sensiblement suivant le contour de celui-ci, se trouve interposée, localement, dans le corps de filtre (13), du côté de l'organe de filtration (14) opposé à l'organe de circulation (16), au voisinage immédiat de l'organe de filtration (14), une plaque d'interception (25) fixe, et que, au corps de filtre (13), est raccordée, latéralement, entre l'élément filtrant (15) de l'organe de filtration (14) et la plaque d'interception (25), une autre canalisation (26), qui est une canalisation de sortie pour le fluide de nettoyage, **caractérisé en ce que** l'organe de filtration (14) comporte des rayons (28), qui, en saillie sur son élément filtrant (15), fractionnent en compartiments (29) son volume intérieur au droit de la canalisation (26) formant la canalisation de sortie du fluide de nettoyage, et ces rayons (28) s'étendent librement jusqu'au voisinage immédiat du corps de filtre (13).

2. Filtre suivant la revendication 1, **caractérisé en ce que**, du côté de son élément filtrant (15) opposé à ses rayons (28), l'organe de filtration (14) comporte une jante (30) dont est solidaire une couronne dentée (31) propre à son entraînement en rotation.

3. Filtre suivant l'une quelconque des revendications 1 ou 2, **caractérisé en ce que** l'angle au centre (A1) de la plaque d'interception (25) est supérieur à celui (A2) des compartiments (29) définis par les rayons (28).

4. Filtre suivant l'une quelconque des revendications 1 à 3, **caractérisé en ce que** l'organe de circulation (16) est disposé en aval de l'organe de filtration (14) dans le corps de filtre (13), et la plaque d'interception (25) est disposée en amont.

5. Echangeur de chaleur du genre dans lequel circulent des éléments solides de nettoyage, avec, interposé sur sa conduite de sortie, pour la retenue de ces éléments solides de nettoyage, un dispositif d'interception constitué par un filtre (12), **caractérisé en ce que** le filtre (12) formant le dispositif d'interception est conforme à l'une quelconque des revendications 1 à 4.

## Claims

1. Filter to be inserted on a conduit of the type having, in a filter body (13) able to be connected to successive lengths (11A, 11B) of this pipe (11), a filtration unit (14) which, in the general form of a wheel, extends transversely in the filter body (13) and which, mounted so as to rotate about the axis (A) thereof, has a filtering element (15) which extends overall over the cross-section of flow of the filter body (13) with, on one side of this filtration unit (14), for local reverse-flow circulation of a cleaning fluid through its filtering element (15), a circulation unit (16), which extends along a radius of the filtration unit (14), and to which there is connected a pipe (18) which is an inlet pipe for the cleaning fluid, whilst, in line with this circulation unit (16), substantially following the contour thereof, there is interposed, locally, in the filter body (13), on the side of the filtration unit (14) opposite to the circulation unit (16), in the immediate vicinity of the filtration unit (14), a fixed interception plate (25), and that, to the filter body (13), there is connected, laterally, between the filtering element (15) of the filtration unit (14) and the interception plate (25), another pipe (26), which is an outlet pipe for the cleaning fluid, **characterised in that** the filtration unit (14) has spokes (28) which, projecting on its filtering element (15), divide its internal volume into compartments (29) in line with the pipe (26) forming the outlet pipe for the cleaning fluid, and these spokes (28) extend freely as far as the immediate vicinity of the filter body (13).

2. Filter according to Claim 1, **characterised in that**, on the side of its filtering element (15) opposite to its spokes (28), the filtration unit (14) has a rim (30) to which there is fixed a toothed ring (31) suitable for driving it in rotation.

3. Filter according to either one of Claims 1 or 2, **characterised in that** the angle (A1) at the centre of the interception plate (25) is greater than that (A2) of the compartments (29) defined by the spokes (28).

4. Filter according to any one of Claims 1 to 3, **characterised in that** the circulation unit (16) is disposed downstream of the filtration unit (14) in the filter body (13), and the interception plate (25) is disposed upstream.

5. Heat exchanger of the type in which solid cleaning elements circulate with, interposed on its outlet pipe, for retaining these solid cleaning elements, an interception device consisting of a filter (12), **characterised in that** the filter (12) forming the interception device is in accordance with any one of Claims 1 to 4.

## Patentansprüche

1. Filter zum Einbauen in eine Leitung, das in einem Filtergehäuse (13), das dafür ausgelegt ist, an zwei aufeinanderfolgende Abschnitte (11A, 11B) der betreffenden Leitung (11) angeschlossen zu werden, ein allgemein radförmiges Filtrierorgan (14) aufweist, das sich in dem Filtergehäuse (13) in Querrichtung erstreckt, um dessen Achse (A) drehbar angeordnet ist und ein Filterelement (15) aufweist, dessen Ausdehnung sich insgesamt über den Durchgangsquerschnitt des Filtergehäuses (13) erstreckt, wobei auf einer Seite dieses Filtrierorgans (14) für einen örtlichen Umlauf eines Reinigungsfluids durch sein Filterelement (15) im Gegenstrom ein Umlauforgan (16) vorgesehen ist, das sich gemäß einem Radius des Filtrierorgans (14) erstreckt und an das eine Leitung (18) angeschlossen ist, die eine Eintrittsleitung für das Reinigungsfluid ist, während auf Höhe dieses Umlauforgans (16) und im wesentlichen gemäß dessen Umriss örtlich in das Filtergehäuse (13) auf der dem Umlauforgan (16) entgegengesetzten Seite des Filtrierorgans (14) in unmittelbarer Nähe des Filtrierorgans (14) eine feststehende Abfangplatte (25) eingesetzt ist und an dem Filtergehäuse (13) seitlich zwischen dem Filterelement (15) des Filtrierorgans (14) und der Abfangplatte (25) eine weitere Leitung (26) angeschlossen ist, die eine Austrittsleitung für das Reinigungsfluid ist, **dadurch gekennzeichnet, dass** das Filtrierorgan (14) auf seinem Filterelement (15) vorstehende Speichen (28) aufweist, die sein Innenvolumen auf Höhe der die Austrittsleitung für das Reinigungsfluid bildenden Leitung (26) in Abteile (29) teilen, und diese Speichen (28) sich bis in unmittelbare Nähe des Filtergehäuses (13) frei erstrecken.

2. Filter nach Anspruch 1, **dadurch gekennzeichnet, dass** das Filtrierorgan (14) auf der den Speichen (28) entgegengesetzten Seite seines Filterelements (15) eine Felge (30) aufweist, mit der ein Zahnkranz (31) fest verbunden ist, der seinen Drehantrieb gestattet.

3. Filter nach einem der Ansprüche 1 oder 2, **dadurch gekennzeichnet, dass** der Zentriwinkel (A1) der Abfangplatte (25) größer als der (A2) der von den Speichen (28) abgegrenzten Abteilen (29) ist.

4. Filter nach einem der Ansprüche 1 bis 3, **dadurch gekennzeichnet, dass** das Umlauforgan (16) im Filtergehäuse (13) stromab des Filtrierorgans (14) und die Abfangplatte (25) stromauf angeordnet ist.

5. Wärmetauscher, in dem feste Reinigungselemente umlaufen, wobei in seiner Austrittsleitung zum Zurückhalten dieser festen Reinigungselemente eine von einem Filter (12) gebildete Abfangvorrichtung eingesetzt ist, **dadurch gekennzeichnet, dass** das die Abfangvorrichtung bildende Filter (12) gemäß einem der Ansprüche 1 bis 4 ausgebildet ist.
